# EUROPEAN PATENT APPLICATION

(11) **EP 3 626 991 A1**
(43) Date of publication of application: **25.03.2020**
(21) Application number: 18461612.6
(22) Date of filing: 24.09.2018
(51) Int. Cl.: F16D 41/02, F16D 41/18, F16D 41/22, F16D 43/202

(54) **TWO-WAY AUTOMATIC CLUTCH**

(71) Applicant: Fibar Group S.A., 60-421 Poznan (PL)
(72) Inventor: Czajczynski, Krzysztof, 62-081 Wysogotowo (PL)
(74) Representative: Blonski, Pawel

(57) **Abstract**

A two-way automatic clutch comprising: a driving wheel, being mounted on an axle, and configured to receive a driving torque; a coupling element, being mounted on said axle; a driven wheel, being mounted on said axle, and configured to selectively receive a driving torque, from the driving wheel, depending on the state of the coupling element; wherein said axle comprises, mounted thereon, the driving wheel, an immovable plate, the coupling element, a spring and the driven wheel; wherein the immovable plate has a cut-out portion configured to receive an engaging portion of the coupling element, which has a shape corresponding to the cut-out portion; wherein the driving wheel is configured to push, when rotating, the coupling element out of the immovable plate; wherein the coupling element is configured to be pushed out of the immovable plate by the driving wheel when said driving wheel is rotating; wherein the spring is configured to facilitate a return of the coupling element to its initial position.

## Description

### TECHNICAL FIELD

The present invention relates to a two-way automatic clutch. In particular the present invention relates to elimination of an additional drive for declutching an engine driving a given mechanism via said clutch, in particular a cylinder lock insert.

### BACKGROUND OF THE INVENTION

Prior art defines automatic locks where an additional motor is used in order to engage and disengage a main motor of the automatic lock.

It would be advantageous to eliminate this additional motor/drive for declutching a motor driving a given mechanism, in particular a cylinder lock insert. Such a solution would be more cost effective as well as comprise fewer parts that may break.

There are known locks, which, for manual operation, require application of a relatively high torque (because a user, by rotating a knob, also rotates the complete transmission as well as a motor. It would be advantageous to obviate this difficulty.

The aim of the development of the present invention is an improved and cost effective two-way automatic clutch.

### SUMMARY AND OBJECTS OF THE PRESENT INVENTION

An object of the present invention is a A two-way automatic clutch comprising: a driving wheel, being mounted on an axle, and configured to receive a driving torque; a coupling element, being mounted on said axle; a driven wheel, being mounted on said axle, and configured to selectively receive a driving torque, from the driving wheel, depending on the state of the coupling element; wherein said axle comprises, mounted thereon, the driving wheel, an immovable plate, the coupling element, a spring and the driven wheel; wherein the immovable plate has a cut-out portion configured to receive an engaging portion of the coupling element, which has a shape corresponding to the cut-out portion; wherein the driving wheel is configured to push, when rotating, the coupling element out of the immovable plate; wherein the coupling element is configured to be pushed out of the immovable plate by the driving wheel when said driving wheel is rotating; wherein the spring is configured to facilitate a return of the coupling element to its initial position due to a force applied by the spring.

Preferably, said driving wheel comprises teeth projecting radially from it.

Preferably, said engaging portion of the coupling element is a splined coupling.

Preferably, said pushing action of the driving wheel is effected by having on its face in the axial direction towards the coupling element, locking elements each having a pair of cams positioned on a circular outline of the driving wheel, adjacent the locking element while the cams are such that the closer to the locking element, the further axially to the outside, the surface of each cam is.

Preferably, said configuration, of the coupling element, facilitating being pushed out comprises locking elements, on its face in the axial direction towards the driving wheel, each having a pair of cams positioned on a circular outline of the coupling element, adjacent to it while the cams are such that the closer to the locking element, the further axially to the outside, the surface of each cam is.

Preferably, the coupling element comprises, on the side facing the driven wheel, teeth that are configured to slide in between the corresponding teeth of the driven wheel.

Preferably, the driven wheel comprises coupling teeth on its side facing the coupling element.

Preferably, said teeth have triangular profile or an involute profile.

Preferably, a rebound spring is mounted as a first element on the axle, adjacent a first body part as well as the driven wheel, said rebound spring being configured to facilitate an axial movement of the driven wheel thereby resulting in sliding out of the coupling element from the immovable plate of the body.

Preferably, a stiffness of the rebound spring is greater than the stiffness of the spring.

Another aspect of the present invention is an electronic lock comprising the two-way automatic clutch according to the present invention and an electric motor configured to drive the driving wheel of the two-way automatic clutch.

Preferably, said electronic lock comprises: an immovable body comprising two parts configured to hold the two-way automatic clutch elements in place, wherein the two parts are detachably connected to each other by means of fastening elements; wherein two parts are configured to receive the two ends of said axle so that said axle is immovable; and wherein said immovable plate is fixed to the body formed by either the first part or the second part.

Further aspect of the present invention is a method for operating the two-way automatic clutch according to the present invention wherein said method comprises the steps of: setting an initial state in which the two-way automatic clutch is disengaged wherein in this state, it is possible to rotate the driven wheel without moving the driving wheel at the same time; rotating said driving wheel; engaging the driving wheel and the coupling element causing an axial movement of the coupling element towards the driven wheel wherein the resistance of the spring is overcome; causing, by a further rotation, a further movement of the coupling element until the coupling element leaves the immovable plate; causing, by a further rotation, a movement of the coupling element until it engages the driven wheel.

Preferably, said method further comprises the steps of: changing the direction of rotation of the driving wheel; moving away, by means of a further rotation the driving wheel from the coupling element; and moving away, by means of a further rotation, the coupling element from the driven wheel under a force of the spring and pushing the coupling element back into the immovable plate.

### BRIEF DESCRIPTION OF THE DRAWINGS

These and other objects of the invention presented herein, are accomplished by providing a two-way automatic clutch. Further details and features of the present invention, its nature and various advantages will become more apparent from the following detailed description of the preferred embodiments shown in a drawing, in which:
Fig. 1 presents an exploded view of the two-way automatic clutch according to the present invention;
Fig. 2 presents an assembled view of the two-way automatic clutch according to the present invention;
Fig. 3 presents an exploded view of key components of the two-way automatic clutch from a first perspective;
Fig. 4 presents an exploded view of key components of the two-way automatic clutch from a second perspective;
Fig. 5 presents an exploded view of key components of the two-way automatic clutch in a second embodiment;
Fig. 6 presents a method according to the present invention;
Fig. 7 presents an example of application, of the two-way automatic clutch according to the present invention, in a door lock system; and
Fig. 8 shows a complete door lock system using the present invention.

### DESCRIPTION OF EMBODIMENTS

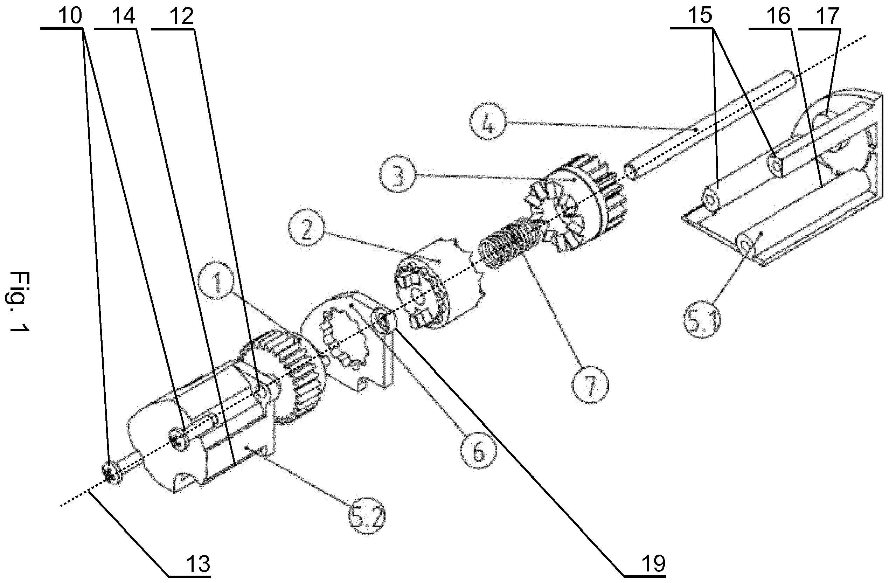

Fig. 1 presents an exploded view of the two-way automatic clutch according to the present invention. The two-way automatic clutch comprises an immovable body comprising two parts 5.1, 5.2 configured to hold the two-way automatic clutch elements in place, wherein the two parts 5.1, 5.2 are detachably connected to each other by means of fastening elements such as screws 10. For example, one of the two parts 5.1 comprises threads 15 for receiving said screws 10 that also engage suitable vias 12 of the other part 5.2.

Further, the first part 5.1 may comprise a protruding member 16, having a through hole positioned along (in parallel to, which is preferred but not required positioning) a main axis 13 of the two-way automatic clutch, which fits a recess 14 in the second part 5.2, wherein the protruding member 16 is configured to receive a fastening means, such as a suitable screw (not shown), for fastening the two-way automatic clutch to a respective driven mechanism, such as a cylinder lock.

In an alternative example, the first part 5.1 may be an integral part of an outer body of the complete device.

The first part 5.1 comprises a flanged bushing 17 (or similar mounting acting as an axle mounting/socket) for receiving an axle 4, the axle 4 being configured to have the key components of the two-way automatic clutch to be mounted thereon. The axle 4 thereby sets the main axis 13 of the two-way automatic clutch according to the present invention.

The second part 5.2 comprises a corresponding flanged bushing 18 (not shown in Fig. 1 due to the angle of view) for receiving the other end of said axle 4. Once mounted in the respective flanged bushings 17, 18 the axle 4 is immovable.

In alternative embodiments either of the elements 1, 2, or 3 may comprise an integrated axle, configured to rotate with such element.

Additionally, either the first part 5.1 or the second part 5.2, may form a cover of the mechanism of the two-way automatic clutch such that a body of two-way automatic clutch is formed.

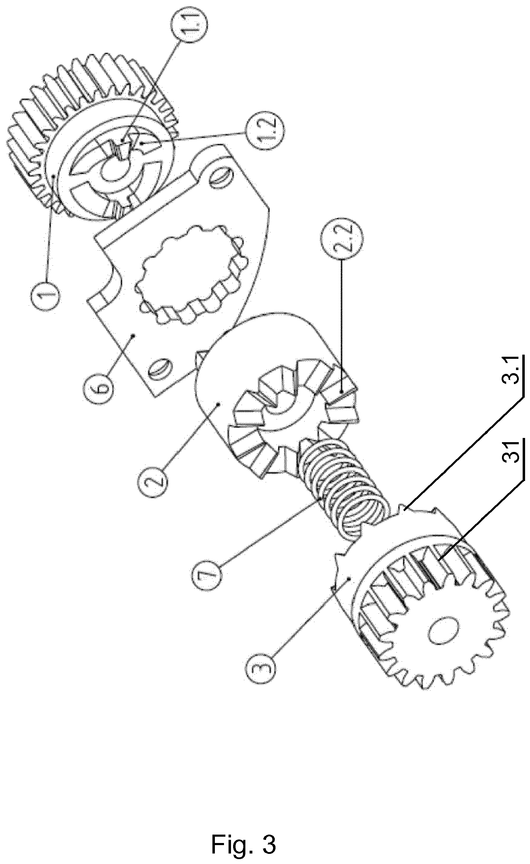

A driving wheel 1 comprises on its perimeter a plurality of teeth and is mounted on the axle 4 next to the second part 5.2. More details of the driving wheel 1 will be presented with reference to Fig. 3.

Said driving wheel 1, when comprising said plurality of teeth, may be directly driven by another driving wheel (for example driven by an engine). Alternatively, the driving wheel 1 may be present without said teeth and be driven by a suitable belt such as a flat belt or a wedge belt. In general, said driving wheel is configured to receive a driving torque (for example from an electric engine).

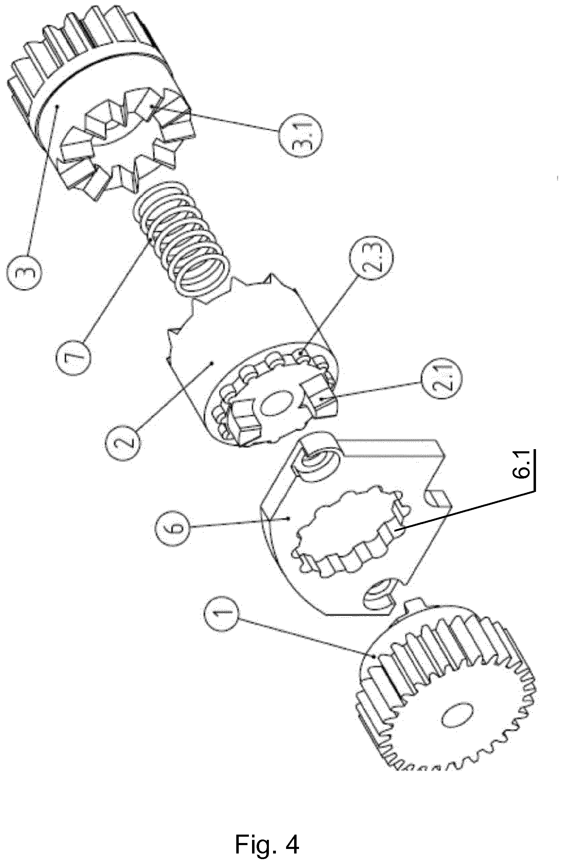

The next element is an immovable plate 6 of the body, which is fixed to the body, for example by means of the screws 10 passing via appropriate through holes 19 of the immovable plate 6. The immovable plate 6 may further be blocked in place by said protruding member 16 positioned in an appropriate recess of the immovable plate 6 corresponding to the recess 14 of the second part 5.2. More details of the immovable plate 6 will be presented with reference to Fig. 4.

The driving wheel 1 is configured to transfer the driving torque to a driven wheel 3 via a coupling element 2 (depending on the state of the coupling element). As may be seen in the figure, the driving wheel 1, the coupling element 2 as well as the driven wheel 3 both have a substantially cylindrical shape with differently shaped engaging faces or sides. These parts have also, in a preferred embodiment, the same or similar diameter but in other embodiment their sizes need not be similar.

A spring 7 is positioned, on the axle 4, between the coupling element 2 and the driven wheel 3 and is configured to facilitate a return of the coupling element 2 to its initial position due to a force applied by the spring 7.

As may be readily seen the driving wheel 1, the immovable plate 6, the coupling element 2, the spring 7 and the driven wheel 3 are mounted on the axle 4 in the order given, starting from the second part 5.2.

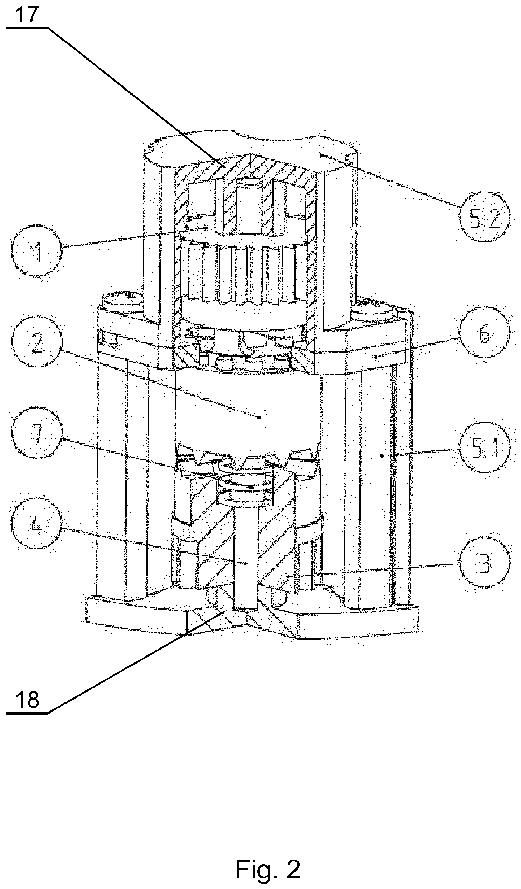

Fig. 2 presents an assembled view of the two-way automatic clutch according to the present invention. Herein, a cross-section of the two-way automatic clutch is presented. As may be readily seen, the components described with reference to Fig. 1 are mounted on the axle 4 and the complete two-way automatic clutch is enclosed by the two parts 5.1, 5.2.

Further, said axle 4 is mounted in the respective flanged bushings 17, 18 of the two parts 5.1, 5.2.

In this view, it may be seen that the driving wheel 1 is configured to push, as it rotates, the coupling element 2 out of the immovable plate 6. To this end, the driving wheel 1 comprises appropriate teeth on its perimeter as will be discussed in the next paragraphs.

Fig. 3 presents an exploded view of key components of the two-way automatic clutch from a first perspective.

The driving wheel 1 has two portions. The first portion comprises a cylinder or disk with teeth projecting radially from it. Typically, the teeth are not straight-sided (but usually of special form to achieve a constant drive ratio, mainly involute but less commonly cycloidal), the edge of each tooth is straight and aligned parallel to the main axis 13 of rotation.

The second portion 1.1, 1.2 of the driving wheel 1 is present on its face in the axial direction towards the coupling element 2. The more the locking elements 1.1 the less load they carry. Nevertheless, it is usually not beneficial to have more than 3 locking elements 1.1 because it makes decoupling more difficult. On the other hand, one locking element 1.1 will not allow coupling because it will move the coupling element 2 in a non-symmetrical manner.

Correspondingly, the coupling element 2 has on its face, coinciding with the second portion 1.1, 1.2 of the driving wheel 1, a pair of cams (will be shown in Fig. 4) similar or the same as the 1.1, 1.2 elements. These elements result in that the coupling element 2 is configured to be pushed out of the immovable plate 6 by the driving wheel 1 as it rotates;

Further, the coupling element 2 has on its opposite face (facing the driven wheel 3) a crown gear or contrate gears (2.2) that are a particular form of crown gear whose teeth project at right angles to the plane of the wheel. In their orientation the teeth resemble the points on a crown.

These crown teeth are configured to slide in between the corresponding teeth of the driven wheel 3. Crown, triangular teeth have been selected for this purpose since such shape makes coupling easier. Nevertheless other shapes of the teeth (or protrusions in general) may be employed for this purpose (not necessarily crown gear).

The spacing of the teeth, of the coupling element 2, is preferably greater than the width of the teeth (their base on the coupling element 2). This allows to decrease a risk of one tooth blocking on the opposite tooth. However, a small number of teeth will result in too much reversible clearance between the coupling element 2 and the driven wheel 3 (i.e. the coupling element 2 has to rotate by a given angle in order for the teeth 2.2 to engage the corresponding teeth 3.1)

In this view, it may be seen that the driving wheel 1 comprises a portion 1.1, 1.2 that fits the opening in the immovable plate 6 and may rotate in it. This potion comprises a pair of cams 1.2, having an angled surface (inclined with respect to the circumference), positioned on each side of a locking element 1.1 (for example a tooth) configured to engage a corresponding locking element 2.1 (shown in Fig. 4) of the coupling element 2 when the driving wheel 1 rotates about the axle 4.

The pair of cams 1.2 are positioned on a circular outline, adjacent the locking element 1.1 while the angled surface is such that the closer to the locking element 1.1, the further (axially) to the outside the surface of each cam 1.2 is.

The axial height of the cams 1.2 corresponds to the thickness of the immovable plate 6. The coupling element 2 moves towards the driven wheel 3 by the axial height of the cams 1.2 therefore the thickness of the immovable plate 6 shall allow pushing out the coupling element 2 so that it may rotate.

The driven wheel 3 comprises on its perimeter (around the main axis 13) a plurality of radially extending teeth 31 projecting from it. The teeth 31 are in contact with another gearwheel, which typically receives a driving torque (thus the driven wheel 3 is coupled to a torque receiving element). On the opposite side of said teeth 31, the driven wheel 3 comprises triangular teeth 3.1 (or otherwise coupling teeth) facing corresponding teeth 2.2 of said coupling element 2.

In other embodiments the wheels 1, 3 may comprise other types of teeth such as involute, cycloidal or Nowikow or the like. Further, the driven wheel 3 may be present without said teeth and be driven by a suitable belt such as a flat belt or a wedge belt.

The driven wheel 3 is configured similarly to the driving wheel 1 in a sense that it comprises two portions. The first portion 31 is positioned further away from from the coupling element 2 and comprises the respective gear teeth while the second portion 3.1 forms a crown gear or contrate gears that are a particular form of crown gear whose teeth project at right angles to the plane of the driven wheel 3.

The spacing of the teeth, of the driven wheel 3, is preferably greater than the width of the teeth (their base on the coupling element 2). This allows to decrease a risk of one tooth blocking on the opposite tooth.

However, a small number of teeth will result in too much reversible clearance between the coupling element 2 and the driven wheel 3 (i.e. the coupling element 2 has to rotate by a given angle in order for the teeth 2.2 to engage the corresponding teeth 3.1).

The spacing between the teeth influences said reversible clearance wherein the wider the spacing the greater the reversible clearance.

Fig. 4 presents an exploded view of key components of the two-way automatic clutch from a second perspective.

As may be seen, the Immovable plate 6 has a cut-out portion configured to receive an engaging portion 2.3 of the coupling element 2, which has a shape corresponding to the cut-out portion. To this end, a splined coupling 2.3 may be used which is a safeguard against rotation.

The Immovable plate 6 comprises grooves 6.1 on its inner perimeter, which prevent rotation of the coupling element 2 as long as it has not been moved towards the driven wheel 3.

One skilled in the art will appreciate that the cut-out portion of the Immovable plate 6 may have other shapes and the shape, given in the example, is not the only possible.

Further, the cut-out portion of the Immovable plate 6 may have its grooves rounded at their edges so that during coupling, when the coupling element 2 moves axially, there is possible a slight rotation of this element (when the engaging portion 2.3 touches the immovable plate. Similarly, during decoupling, the coupling element 2 enters the immovable plate more easily.

The corresponding locking element 2.1 of the locking element 1.1 has preferably the same shape including the shape of the locking element 1.1 and said cams 1.2. As shown, the locking elements 2.1 face the locking elements 1.1.

Taking into account the arrangement shown in Figures 1 - 4 the coupling is effected automatically by rotating (in an arbitrary direction), by means of any rotating means such as a motor (typically an electric motor), the driving wheel 1 (by a given angle depending on the number of said locking elements 1.1 and 2.1), which by means of the coupling element 2 transfers the driving torques to the driven wheel 3.

The coupling of the driving wheel 1 and the coupling element 2 is effected by means of the locking elements 1.1 and 2.1. The angled cams 1.2 cause an axial movement of the coupling element 2 towards the driven wheel 3 wherein this movement in turn couples the coupling element 2 with the driven when by means of the teeth 2.2 and 3.1 (preferably triangular teeth having two vertices of the triangle on the respective elements 2, 3).

A key feature of the coupling element 2 is its safeguard against rotation effected for example by a splined coupling between the engaging portion 2.3 of the coupling element 2 and the immovable plate 6 of the body, which also forces an axial movement (along the main axis 13).

A potential risk of blocking the two-way automatic clutch (for example due to the teeth 2.2 abutting against the teeth 3.1) may be mitigated in one of two different, preferred ways.

The first method is to use the aforementioned triangular profile of the teeth or an involute profile of the teeth 2.2, 3.1. In case of an involute profile, the profiles of the teeth are involutes of a circle. The involute of a circle is the spiraling curve traced by the end of an imaginary taut string unwinding itself from that stationary circle called the base circle.

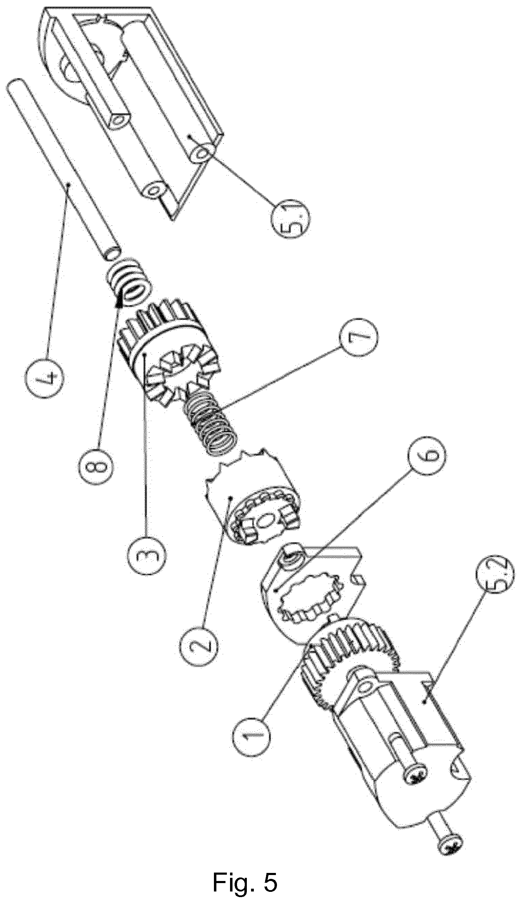

The second method is to use an additional rebound spring 8 shown in Fig. 5. The rebound spring 8 is mounted as a first element on the axle 4 when considering the first part 5.1 and its flanged bushing 17. In case of a block of the two-way automatic clutch, the rebound spring 8 will facilitate an axial movement of the driven wheel 3 thereby resulting in sliding out of the coupling element 2 from the immovable plate 6 of the body.

The rebound spring 8 adds elasticity to the system in case the teeth of the coupling element 2 do not easily engage the teeth of the aforementioned driven wheel 3. In such case, the driven wheel 3 will slightly back away thereby facilitating the coupling.

A stiffness of the rebound spring 8 shall be greater than the stiffness of the spring 7. For example the stiffness of the rebound spring 8 is 2 times greater than the stiffness of the spring 7. In another example, the rebound spring 8 may have the same number of loops (and the same material) as the spring 7 but at the same time having greater diameter thereby facilitating greater stiffness of for example 4-5x.

Both the rebound spring 8 as well as the spring 7 are preferably compression springs.

The decoupling of the driving wheel 1 and the coupling element 2 is effected by a rotation of the driving wheel 1 in an opposite direction by an appropriate angle so as to allow a return of the coupling element 2 to the initial position due to a force applied by the spring 7. In such an arrangement, there is possible a free movement of the mechanism, from the side of the driven wheel 3, without moving the associated motor.

The two-way automatic clutch, according to the present invention, allows for operation of the mechanism regardless of the direction of rotation of the associated motor driving the driving wheel 1.

In view of the above description, it is clear that the coupling and decoupling is effected as follows. The driving wheel 1 comprises said locking elements 1.1 operating with the corresponding locking elements 2.1. During a rotation of the driving wheel 1, by 90 degrees, the angled cams 1.2 cause an axial movement of the coupling element 2 towards the driven wheel 3 (items 2 and 3 couple). The coupling element 2 does not move at this stage as it is held by the Immovable plate 6.

After an approximately 90-degree rotation (this angle depends of the number and shape of the locking elements) the locking elements 1.1 of the driving wheel 1 meet the locking elements 2.1 of the coupling element 2. A further rotation of the driving wheel 1, in the same direction, causes a collective rotation of the coupling element 2 and the driven wheel 3.

In order to decouple the arrangement, the driving wheel 1 must be rotated, for example by 90 degrees, in an opposite direction to the coupling rotation direction.

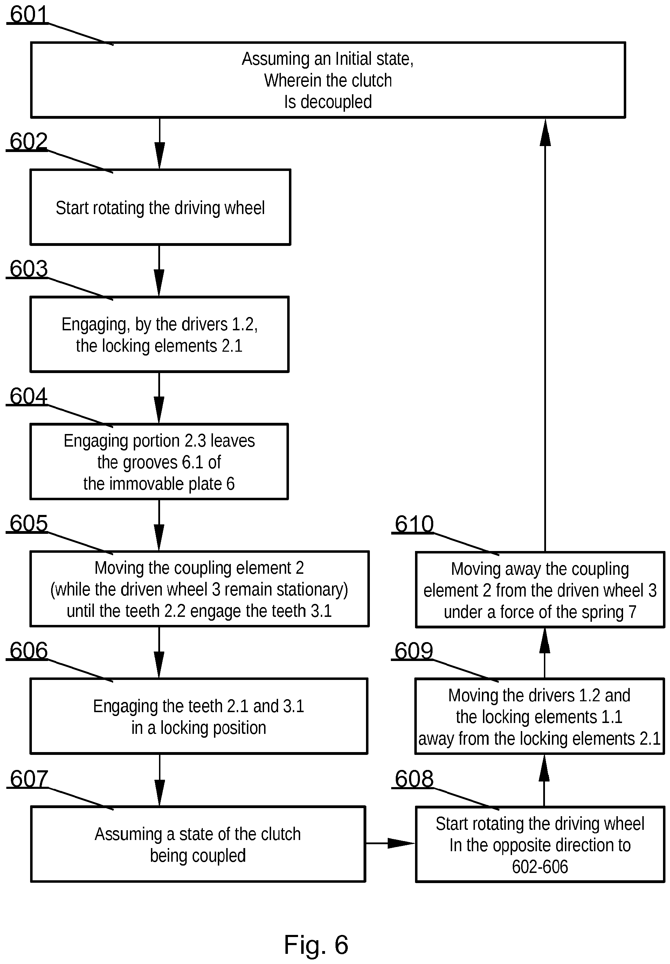

Fig. 6 presents a method according to the present invention. At step 601 the two-way automatic clutch is disengaged, decoupled, which is its initial state. In this state, it is possible to rotate the driven wheel 3 without moving the driving wheel 1 at the same time.

At step 602, the driving wheel 1 is rotated, typically by means of a motor. The continuous rotation will cause effects of steps 603 - 606. The direction of rotation is not relevant.

The cams 1.2 engage 603 the locking elements 2.1 causing an axial movement of the coupling element 2 towards the driven wheel 3 wherein a resistance of the spring 7 is overcome.

A further rotation 604 causes further movement of the coupling element 2 until the engaging portion 2.3 of the coupling element 2 leaves the grooves 6.1 of the immovable plate 6.

A further rotation 605 (the locking elements 2.1 and 1.1 are engaged) causes movement of the coupling element 2 (while the driven wheel 3 remain stationary) until the teeth 2.2 engage the teeth 3.1.

In case the two-way automatic clutch comprises the rebound spring 8, at step 606 the vertices of the teeth 2.2 and 3.1 meet, which pushes the rebound spring 8. The deflection of the rebound spring 8 allows for engaging the teeth 2.1 and 3.1 in a locking position (teeth contact).

When the rebound spring 8 is not present, the engaging of the teeth 2.1 and 3.1 in a locking position may be more difficult depending on the teeth shape and teeth materials used.

At step 607 the two-way automatic clutch is engaged i.e. a rotation of the driving wheel 1 will cause simultaneous rotation of the driven wheel 3.

At step 608, the driving wheel 1 is rotated, typically by means of a motor. The continuous rotation will cause effects of steps 609 - 611. The direction of rotation is opposite to the direction of rotation used during steps 602-606.

At step 609, by means of further rotation the cams 1.2 and the locking elements 1.1 move away from the locking elements 2.1

Next, at step 610, by means of further rotation the coupling element 2 moves away from the driven wheel 3 under a force of the spring 7 and the engaging portion 2.3 of the coupling element 2 is pushed into the grooves 6.1 of the immovable plate 6.

Typically, based on information from an encoder, the aforementioned electric motor applies a rotation, which is configured to rotate the driving wheel 1 by an appropriate angle.

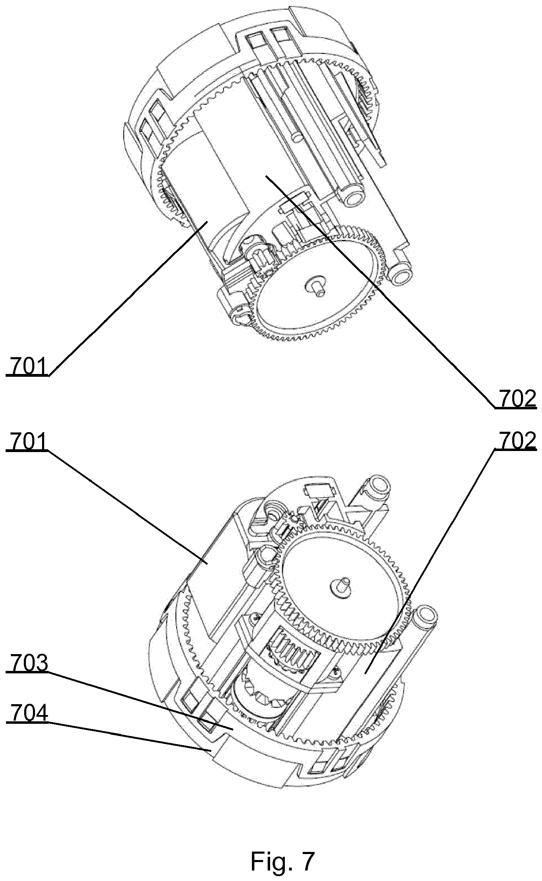

Fig. 7 presents an example of application, of the two-way automatic clutch according to the present invention, in a door lock system. The electronic lock comprises a main housing 702, which covers an electric motor 701 as well as other components of the system.

Typically, a fixed base will be present such as a fixed gear base 703 facilitating mounting of the electronic lock on a door. The fixed gear base 703 may engage a fixed gear internal teeth 704 wherein the elements 703 and 704 form a fixed wheel to be attached to a door.

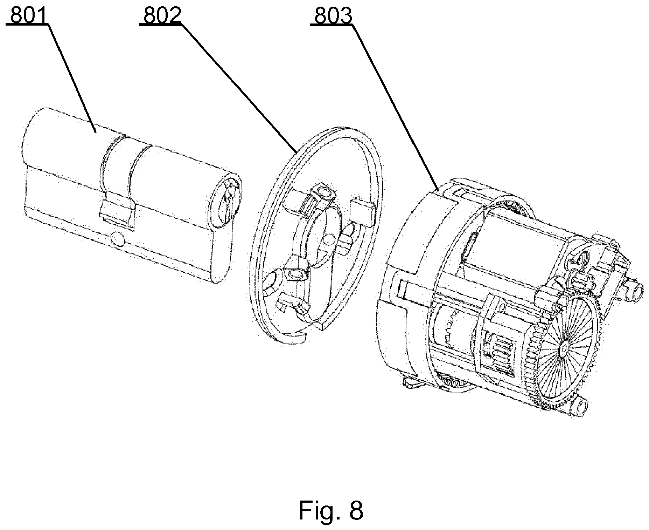

Fig. 8 shows a complete door lock system using the present invention. The system comprises a lock 801 (typically inserted in a door), a mounting plate 802 (typically fixed to the door) and the electronic lock as shown in Fig. 7.

The system may also comprise a suitable controller and a communication module allowing for it to be remotely controlled as well as report its current state to a remote system. Typically, the system will be battery-powered.

The present invention relates to a two-way automatic clutch, which eliminates an additional drive for declutching an engine (typically an electric engine) driving a given mechanism. Therefore, the invention provides a useful, concrete and tangible result.

The present invention concerns a mechanical device, defined by spatially positioned mechanical parts, meaning that the machine or transformation test is fulfilled and that the idea is not abstract.

## Claims

1. A two-way automatic clutch comprising:
• a driving wheel (1), being mounted on an axle (4), and configured to receive a driving torque;
• a coupling element (2), being mounted on said axle (4);
• a driven wheel (3), being mounted on said axle (4), and configured to selectively receive a driving torque, from the driving wheel (1), depending on the state of the coupling element (2);
said two-way automatic clutch being **characterized in that** if further comprises;
• said axle (4) comprises, mounted thereon, the driving wheel (1), an immovable plate (6), the coupling element (2), a spring (7) and the driven wheel (3);
• wherein the immovable plate (6) has a cut-out portion configured to receive an engaging portion (2.3) of the coupling element (2), which has a shape corresponding to the cut-out portion;
• wherein the driving wheel (1) is configured to push, when rotating, the coupling element (2) out of the immovable plate (6);
• wherein the coupling element (2) is configured to be pushed out of the immovable plate (6) by the driving wheel (1) when said driving wheel (1) is rotating;
• wherein the spring (7) is configured to facilitate a return of the coupling element (2) to its initial position due to a force applied by the spring (7).

2. The two-way automatic clutch according to claim 1 wherein said driving wheel (1) comprises teeth projecting radially from it.

3. The two-way automatic clutch according to claim 1 wherein said engaging portion (2.3) of the coupling element (2) is a splined coupling (2.3).

4. The two-way automatic clutch according to claim 1 wherein said pushing action of the driving wheel (1) is effected by having on its face in the axial direction towards the coupling element (2), locking elements (1.1) each having a pair of cams (1.2) positioned on a circular outline of the driving wheel (1), adjacent the locking element (1.1) while the cams are such that the closer to the locking element (1.1), the further axially to the outside, the surface of each cam (1.2) is.

5. The two-way automatic clutch according to claim 1 wherein said configuration, of the coupling element (2), facilitating being pushed out comprises locking elements (2.1), on its face in the axial direction towards the driving wheel (1), each having a pair of cams positioned on a circular outline of the coupling element (2), adjacent to it while the cams are such that the closer to the locking element, the further axially to the outside, the surface of each cam is.

6. The two-way automatic clutch according to claim 1 wherein the coupling element (2) comprises, on the side facing the driven wheel (3), teeth (2.2) that are configured to slide in between the corresponding teeth (3.1) of the driven wheel (3).

7. The two-way automatic clutch according to claim 1 wherein the driven wheel (3) comprises coupling teeth (3.1) on its side facing the coupling element (2).

8. The two-way automatic clutch according to claims 6 or 7 wherein said teeth (2.2, 3.1) have triangular profile or an involute profile.

9. The two-way automatic clutch according to claim 1 wherein a rebound spring (8) is mounted as a first element on the axle (4), adjacent a first body part (5.1) as well as the driven wheel (3), said rebound spring (8) being configured to facilitate an axial movement of the driven wheel (3) thereby resulting in sliding out of the coupling element (2) from the immovable plate (6) of the body.

10. The two-way automatic clutch according to claim 1 wherein a stiffness of the rebound spring (8) is greater than the stiffness of the spring (7).

11. An electronic lock comprising:
• the two-way automatic clutch according to claim 1;
• an electric motor configured to drive the driving wheel (1) of the two-way automatic clutch.

12. The electronic lock according to claim 11, wherein said two-way automatic clutch comprises:
• an immovable body comprising two parts (5.1, 5.2) configured to hold the two-way automatic clutch elements in place, wherein the two parts (5.1, 5.2) are detachably connected to each other by means of fastening elements;
• wherein two parts (5.1, 5.2) are configured to receive the two ends of said axle (4) so that said axle (4) is immovable; and
• wherein said immovable plate (6) is fixed to the body formed by either the first part (5.1) or the second part (5.2).

13. A method for operating the two-way automatic clutch according to claim 1 wherein said method comprises the steps of:
• setting an initial state (601) in which the two-way automatic clutch is disengaged wherein in this state, it is possible to rotate the driven wheel (3) without moving the driving wheel (1) at the same time;
• rotating (602) said driving wheel (1);
• engaging (603) the driving wheel (1) and the coupling element (2) causing an axial movement of the coupling element (2) towards the driven wheel (3) wherein the resistance of the spring (7) is overcome;
• causing, by a further rotation (604), a further movement of the coupling element (2) until the coupling element (2) leaves the immovable plate (6);
• causing, by a further rotation (605), a movement of the coupling element (2) until it engages (607) the driven wheel (3).

14. The method according to claim 13 wherein said method further comprises the steps of:
• changing (608) the direction of rotation of the driving wheel (1);
• moving away (609), by means of a further rotation the driving wheel (1) from the coupling element (2); and
• moving away (610), by means of a further rotation, the coupling element (2) from the driven wheel (3) under a force of the spring (7) and pushing the coupling element (2) back into the immovable plate (6).
